# EUROPÄISCHE PATENTANMELDUNG

(11) **EP 4 297 113 A1**
(43) Veröffentlichungstag der Anmeldung: **27.12.2023**
(21) Anmeldenummer: 22179982.8
(22) Anmeldetag: 20.06.2022
(51) Int. Cl.: H01M 4/04, F21V 19/00, G03B 5/00, G01N 21/88

(54) **PRÜFVORRICHTUNG UND VERFAHREN ZUM PRÜFEN VON ELEKTRODENFOLIEN**

(71) Anmelder: Sonplas GmbH, 94315 Straubing (DE)
(72) Erfinder: Bumes, Michael, 94315 Straubing (DE); Kübelböck-Herl, Veronika, 94469 Deggendorf (DE); Streifeneder, Manuel, 94315 Straubing (DE)
(74) Vertreter: Wunderlich & Heim Patentanwälte Partnerschaftsgesellschaft mbB

(57) **Zusammenfassung**

Die Erfindung betrifft eine Prüfvorrichtung und ein Verfahren zum Prüfen von Elektrodenfolien, insbesondere für Batteriefolien, mit einer Halteeinrichtung zum Halten einer Elektrodenfolie, wobei eine zu prüfende Folienkante freiliegt, mindestens einer Kameraeinheit zum Erfassen eines Bildes der Folienkante und mindestens einer Beleuchtungseinheit zum Beleuchten der Folienkante. Nach der Erfindung ist vorgesehen, dass die Prüfvorrichtung ausgebildet ist, sowohl ein Bild der Folienkante von vorne in einer ersten Position als auch ein Bild der Folienkante von einer Seite in einer zweiten Position zu erfassen, welche um etwa 90° verschwenkt zu der ersten Position ist.

## Beschreibung

Die Erfindung betrifft eine Prüfvorrichtung für Elektrodenfolien, insbesondere für Batteriefolien, mit einer Halteeinrichtung zum Halten einer Elektrodenfolie, wobei eine zu prüfende Folienkante freiliegt, mindestens einer Kameraeinheit zum Erfassen eines Bildes der Folienkante und mindestens einer Beleuchtungseinheit zum Beleuchten der Folienkante, gemäß dem Oberbegriff des Anspruchs 1.

Weiterhin betrifft die Erfindung ein Verfahren zum Prüfen einer Elektrodenfolie, insbesondere einer Batteriefolie, insbesondere mit einer Prüfvorrichtung, wobei eine Elektrodenfolie in einer Halteeinrichtung gehalten wird, wobei eine zu prüfende Folienkante freiliegt, mittels mindestens einer Kameraeinheit ein Bild der Folienkante erfasst wird und die Folienkante mit mindestens einer Beleuchtungseinheit beleuchtet wird, gemäß dem Oberbegriff des Anspruchs 12.

Elektrodenfolien werden insbesondere in Batterien und Akkumulatoren in großer Zahl verbaut. Die Elektrodenfolien werden dabei mittels Schneideinrichtungen oder mit einem Energiestrahl, insbesondere einem Laserstrahl, aus großflächigen Elementen, insbesondere einem bandförmigen Ausgangsmaterial, abgetrennt und zugeschnitten.

Die Qualität der Schnittkante an einer Folie ist dabei von maßgeblicher Bedeutung für die Qualität und Funktionsfähigkeit einer daraus hergestellten Batterie. Insbesondere bei einer kompakten gestapelten Anordnung von Elektrodenfolien, zwischen denen üblicherweise jeweils eine dünne Membranschicht angeordnet wird, ist sicherzustellen, dass entlang einer Folienkante keine vorstehenden Schnittgrate oder sonstige Hervorhebungen bestehen. Diese könnten zu einer Beschädigung der angrenzenden empfindlichen Membranschicht und im schlimmsten Fall zu einem elektrischen Kurzschluss zwischen zwei benachbarten Elektrodenfolien führen.

Ein derartiger elektronischer Kurzschluss kann zu einem Leistungsverlust oder zum Ausfall der Batterie insgesamt führen.

Aus der JP 2013-161580 A ist ein Elektrodenprüfverfahren bekannt, bei dem eine Folienkante von beiden Seiten beleuchtet wird und mittels einer Kamera die Folienkante von vorne erfasst wird. Aus der DE 102019120858 A1 und der DE 102017124978 A1 gehen Batteriefolien-Prüfvorrichtungen hervor, bei welchen eine Topografie der gesamten Folie erfasst und hinsichtlich übermäßiger Erhebungen geprüft wird.

Der Erfindung liegt die **Aufgabe** zugrunde, eine Prüfvorrichtung und ein Verfahren zum Prüfen anzugeben, mit welchen in einfacher und effizienter Weise die Qualität einer Folienkante bei einer Elektrodenfolie besonders zuverlässig erfasst werden kann.

Die Aufgabe wird zum einen durch eine Prüfvorrichtung mit den Merkmalen des Anspruchs 1 und zum anderen durch ein Verfahren mit den Merkmalen des Anspruchs 12 gelöst. Bevorzugte Ausführungsformen der Erfindung sind in den jeweils abhängigen Ansprüchen angegeben.

Die erfindungsgemäße Prüfvorrichtung ist dadurch gekennzeichnet, dass diese ausgebildet ist, sowohl ein Bild der Folienkante von vorne in einer ersten Position als auch ein Bild der Folienkante von einer Seite in einer zweiten Position zu erfassen, welche um 90° verschwenkt zu der ersten Position ist.

Gemäß einer Grundidee der Erfindung wird eine zu prüfende Folienkante einer Elektrodenfolie aus zumindest zwei unterschiedlichen Positionen mittels einer Kameraeinheit erfasst. Diese zwei Positionen sind dabei um 90° zueinander versetzt, wobei in der ersten Position die Schnittkante unmittelbar von vorne erfasst wird, während in der zweiten Position sozusagen ein Profil der Folienkante aufgenommen und erfasst wird. Durch die Erfassung der Folienkante aus mindestens zwei unterschiedlichen Positionen kann die Qualität einer Folienkante insbesondere hinsichtlich eines Kantenverlaufes und eventueller Unregelmäßigkeiten besonders zuverlässig erfasst werden. Hierdurch kann eine besonders sorgfältige Prüfung und damit eine gleichbleibend hohe Qualität von Elektrodenfolien sichergestellt werden. Mittels einer Halteeinrichtung wird die Elektrodenfolie zum Prüfen in einer definierten Prüfposition gehalten. Die Elektrodenfolie kann dabei stillstehen (statische Prüfung) oder an der mindestens einen Kameraeinheit definiert vorbei bewegt werden (dynamische Prüfung).

Grundsätzlich können zwei oder mehrere Kameraeinheiten vorgesehen sein, welche insbesondere an den jeweils vorgesehenen Positionen zur Erfassung eines unterschiedlichen Bildes angeordnet sind. Besonders wirtschaftlich ist es nach einer Ausführungsform der Erfindung, dass die Kameraeinheit relativ zur Folienkante mittels einer Verstelleinrichtung verstellbar ist, mit welcher die Kameraeinheit zum Erfassen eines Bildes der Folienkante in der ersten Position und in der zweiten Position verstellbar ist. Die Verstelleinrichtung kann dabei gegenüber einem Grundrahmen der Prüfvorrichtung die Kameraeinheit und/oder die Halteeinrichtung mit der zu prüfenden Elektrodenfolie zum Erfassen der unterschiedlichen Bilder verstellen. Besonders bevorzugt ist es, dass eine einzelne Kameraeinheit mittels der Verstelleinrichtung zwischen zumindest zwei definierten Kamerapositionen zum Erfassen der Bilder in den unterschiedlichen Positionen verstellbar ist. In der Halteeinrichtung kann die Elektrodenfolie für eine statische Prüfung fixiert sein. Bei stillstehender Kameraeinheit kann auch die Lage der Elektrodenfolie geändert werden.

Eine weitere vorteilhafte Ausgestaltung der Erfindung besteht darin, dass die Verstelleinrichtung eine Handbetätigung und/oder einen Verstellantrieb zum Verstellen der Kameraeinheit aufweist. Durch eine Handbetätigung kann eine individuelle Justierung der Kameraeinheit unmittelbar durch einen Bediener erfolgen. Durch die Verwendung eines Stellantriebes kann eine motorische Verstellung durchgeführt werden. Hierdurch kann ein teil- oder vollautomatisierter Prüfvorgang erreicht werden.

Eine besonders stabile Ausführungsform der Erfindung kann dadurch erreicht werden, dass die Verstelleinrichtung einen Schwenkarm aufweist, mit welchem die Kameraeinheit verschwenkbar gelagert ist, vorzugsweise um etwa 90°. Der Schwenkarm kann dabei ein Schwenkgelenk aufweisen, welches an einen Grundkörper, insbesondere eine Grundplatte, der Prüfvorrichtung angebracht ist. Der Schwenkarm kann insbesondere zwischen einer ersten Vertikalposition und einer zweiten Horizontalposition verschwenkt werden. Es können aber auch mehr Kamerapositionen eingestellt werden, etwa für eine Bilderfassung von vorne, von oben und von unten. Es kann dabei ein Schwenkbereich von 180° und mehr vorgesehen sein.

Eine weitere bevorzugte Ausführungsvariante der Erfindung besteht darin, dass die mindestens eine Beleuchtungseinrichtung einstellbar angeordnet ist. Insbesondere über einen Verstellarm kann so eine für die Kantenerfassung günstige Beleuchtungsposition eingestellt werden. Grundsätzlich können für jede vorgesehene Kameraposition fest vorgesehene Beleuchtungseinrichtungen angeordnet sein. Es ist aber auch möglich, dass eine einzelne Beleuchtungseinrichtung zwei oder mehr Beleuchtungspositionen abhängig von der jeweiligen Position der Kameraeinheit annehmen kann. Die Beleuchtungseinrichtung kann dabei ebenfalls an einem Schwenkarm oder an einer sonstigen Stelleinrichtung gelagert sein. Abhängig von der Ausbildung der Beleuchtungseinrichtung kann diese für eine Hintergrundbeleuchtung der Kameraeinheit gegenüberliegend oder in einem gewünschten Beleuchtungswinkel hierzu angeordnet sein.

Besonders vorteilhaft ist es nach einer Weiterbildung der Erfindung, dass eine erste Beleuchtungseinrichtung zum Beleuchten der Folienkante in der ersten Position und eine zweite Beleuchtungseinrichtung zum Beleuchten der Folienkante in einer zweiten Position vorgesehen sind. Somit ist insbesondere für jede Position der Kameraeinheit eine geeignete Beleuchtungseinrichtung angeordnet. Vorzugsweise kann mindestens eine Beleuchtungseinrichtung mit der Kameraeinheit bewegbar sein, und insbesondere an dem Schwenkarm der Kameraeinheit angebracht sein.

Eine weitere Ausführungsform der Erfindung liegt darin, dass eine Steuereinrichtung vorgesehen ist, welche die erste Beleuchtungseinrichtung und/oder die zweite Beleuchtungseinrichtung abhängig von einer Verstellposition der Kameraeinheit aktiviert. Hierdurch wird sichergestellt, dass abhängig von der eingestellten Position der Kameraeinheit eine gewünschte Beleuchtung gegeben ist. Durch die Steuereinrichtung kann die nicht benötigte Beleuchtungseinrichtung ausgeschaltet und die für die gewünschte Position der Kameraeinheit vorgesehene Beleuchtungseinrichtung eingeschaltet werden.

Grundsätzlich kann die zu prüfende Elektrodenfolie unmittelbar in einer Halteeinrichtung eingespannt werden. Die Halteeinrichtung kann insbesondere Spann- oder Klemmelemente aufweisen, zwischen denen die Elektrodenfolie in einer Prüfposition eingespannt wird. Besonders vorteilhaft ist es nach einer Weiterbildung der Erfindung, dass die Elektrodenfolie in der Halteeinrichtung in einer ersten Folienposition und in einer zweiten Folienposition haltbar ist, welche um 180° gewendet zu der ersten Folienposition ist. Hierzu kann die Halteeinrichtung mit einer entsprechenden Verstelleinrichtung ausgebildet sein, mit welcher das eingespannte Folienelement zwischen den einzelnen Prüfpositionen einer statischen Prüfung verstellt werden kann.

Besonders zweckmäßig ist es nach einer Ausführungsvariante der Erfindung, dass die Elektrodenfolie in einer Aufnahmeeinheit aufgenommen ist, mit welcher die Elektrodenfolie in die Halteeinrichtung einsetzbar und darin fixierbar ist. Die Aufnahmeeinheit, welche insbesondere aus zwei Aufnahmeschalen besteht, zwischen denen die Elektrodenfolie aufgenommen und gehalten wird, erlaubt eine besonders schonende Handhabung der Elektrodenfolie beim Prüfen. Sobald die Elektrodenfolie in der Aufnahmeeinheit aufgenommen ist, kann die vorzugsweise kassettenartige oder plattenförmige Aufnahmeeinheit in einfacher Weise in die Halteeinrichtung eingesetzt und darin gespannt werden. So können Beschädigungen der Elektrodenfolie beim Prüfen vermieden werden.

Generell kann die Kameraeinheit mit einem Bildschirm verbunden sein, über welchen eine Bedienperson eine vorzugsweise vergrößerte Darstellung der Folienkante sehen und unmittelbar bewerten kann. Nach einer Ausführungsform der Erfindung ist es besonders bevorzugt, dass die mindestens eine Kameraeinheit mit einer Auswerteeinheit verbunden ist, mit welcher die erfassten Bilder hinsichtlich einer Struktur der Folienkante auswertbar sind. Die Auswerteeinheit kann insbesondere ein Computer oder Prozessor sein, welcher mit einer entsprechenden Software zur Bilderkennung und Bildauswertung versehen ist. Die Auswerteeinheit kann dabei alternativ oder ergänzend zu einem Bildschirm für eine Überprüfung durch eine Bedienperson vorgesehen sein. Für eine Qualitätssicherung können die erfassten Bilddaten gespeichert und einer jeweiligen Elektrodenfolie zugeordnet werden. Bei einer automatischen Auswertung durch eine Software kann eine besonders zuverlässige und objektive Qualitätsüberwachung in effizienter Weise erfolgen.

Eine Auswertung kann durch die Software der Auswerteeinheit hinsichtlich einzelner oder mehrerer relevanten Qualitätskriterien durchgeführt werden. Die Qualitätskriterien können vorzugsweise eine Auswahl aus der folgenden Auflistung aufweisen: die Wärmeeinflusszone (heat-effected-zone / HAZ), abstehende Grate an der Schnittkante (burr), Schmelzwulste an der Schnittkante durch geschmolzene Trägerfolie (dross), einen übermäßigen Abrand der Beschichtung (burnback), Rauigkeit der Schnittkante (roughness) und/oder Parikelablagerungen im Bereich der Schnittkante (particles). Die Auswerteeinheit kann entsprechende Parameter an dem Werkstück erfassen und mit hinterlegten Sollparametern und/oder Grenzwerten zu den Parametern vergleichen und basierend hierauf feststellen, ob die Qualitätskriterien erfüllt oder nicht erfüllt sind. Es kann also automatisch eine Entscheidung über ein Gutteil und ein Schlechtteil getroffen werden. Besonders bevorzugt kann die Auswerteeinheit so ausgebildet sein, dass keine bloße Unterscheidung nach Gutteil und Schlechtteil erfolgt, sondern dass abhängig von den erfassten Qualitätskriterien eine differenzierte Bewertung oder Benotung (grading) erfolgt, wobei beispielweise die Qualität als sehr gut, gut, ausreichend und/oder mangelhaft bewertet werden kann. Weitere Differenzierungen der Werkstückqualität sind möglich.

Eine weitere bevorzugte Ausführungsvariante der Erfindung besteht darin, dass eine Fördereinrichtung zum diskontinuierlichen und/oder kontinuierlichen Fördern der Elektrodenfolie in die und/oder aus der Halteeinrichtung vorgesehen ist. Die Prüfvorrichtung kann so in eine Fertigungsstraße als eine Station integriert werden (Inline-Anordnung). Die Elektrodenfolie kann dabei insbesondere als eine Rollenware in einem Rolle-zu-Rolle-Prozess bearbeitet werden.

Als Fördereinrichtungen können Förderrollen, Förderbänder oder sonstige geeignete Bewegungselemente vorgesehen werden. Das Fördern kann diskontinuierlich oder vorzugsweise kontinuierlich erfolgen. Im letzteren Fall wird eine dynamische Prüfung bei einer sich bewegenden Elektrodenfolie durchgeführt, wobei die Elektrodenfolie vorzugsweise an mehreren versetzt zueinander angeordneten Kameraeinheiten zur Erfassung der Bilder in den unterschiedlichen Positionen vorgesehen sind.

Die Halteeinrichtung kann in diesem Fall beispielsweise aus Führungsschienen gebildet sein, welche die Elektrodenfolie in einer definierten Lage und in einem definierten Abstand an der mindestens einen Kameraeinheit vorbeiführen. Bei einer dynamischen Prüfung ist die mindestens eine Kameraeinheit mit einer entsprechend schnellen Bilderfassung und ausreichenden Bildauflösung ausgebildet.

Das erfindungsgemäße Verfahren zum Prüfen einer Elektrodenfolie ist dadurch gekennzeichnet, dass von der Elektrodenfolie sowohl ein Bild der Folienkante von vorne in einer ersten Position als auch ein Bild der Folienkante von einer Seite in einer zweiten Position erfasst wird, welche um etwa 90° verschwenkt zu der ersten Position ist.

Das Verfahren kann insbesondere durch eine der zuvor beschriebenen Prüfvorrichtungen ausgeführt werden. Dabei können die zuvor beschriebenen Vorteile erzielt werden.

Eine besonders zweckmäßige Verfahrensvariante besteht nach der Erfindung darin, dass zum Erfassen der Bilder die Kameraeinheit mittels einer Verstelleinrichtung in unterschiedliche Positionen zum Erfassen der Bilder der Folienkante verstellt wird. Somit kann durch eine einzelne Kameraeinheit ein Bild der zu prüfenden Folienkante aus verschiedenen Positionen erfasst werden. Durch die Verstelleinrichtung können auch mehr als zwei unterschiedliche Positionen für die Kameraeinheit bereitgestellt werden.

Eine weitere Verbesserung der Bilderfassung aus unterschiedlichen Positionen kann nach einer Weiterentwicklung des Verfahrens dadurch erzielt werden, dass eine Lage der in der Halteeinrichtung gehaltenen Elektrodenfolie geändert wird, insbesondere um 180° gewendet wird. Insbesondere bei der Erfassung der Folienkante von der Seite kann so in besonders wirtschaftlicher Weise eine Erfassung durch die Kameraeinheit sowohl an der Oberseite als auch an der Unterseite durchgeführt werden, ohne dass die Kameraeinheit dabei verstellt werden muss.

Eine weitere vorteilhafte Verfahrensvariante der Erfindung besteht darin, dass die erfassten Bilder der Folienkante bezüglich mindestens einem Qualitätsmerkmal ausgewertet werden, welches ausgewählt ist aus einem Verlauf der Folienkante, einer Rauigkeit der Folienkante und/oder einer thermischen Einwirkung entlang der Folienkante. Die Rauigkeit der Folienkante kann insbesondere durch Messen von Vorsprüngen oder Rücksprüngen entlang der Folienkante erfolgen. Dies kann an einzelnen Positionen sowie über den gesamten Verlauf der zu prüfenden Folienkante erfolgen. Weiterhin kann eine thermische Einwirkung etwa durch Änderung eines Farbverlaufes oder einer Schattierung entlang zumindest einer der Seitenflächen der Elektrodenfolie erfolgen. Auch können aufgeschmolzene Materialtropfen mit einer entsprechenden Rundung, wie sie etwa bei einem Laserschneiden in mikroskopischer oder makroskopischer Größe auftreten können, mit der Kameraeinheit erfasst werden.

Die Erfindung wird nachfolgend anhand eines bevorzugten Ausführungsbeispiels weiter erläutert, das schematisch in den Zeichnungen dargestellt ist. In den Zeichnungen zeigen:
- Fig. 1: eine perspektivische Ansicht einer erfindungsgemäßen Prüfvorrichtung;
- Fig. 2: eine vergrößerte Darstellung einer Aufnahmeeinheit für eine Elektrodenfolie für die Prüfvorrichtung nach Fig. 1 in einer vergrößerten Darstellung;
- Fig. 3: eine Seitenansicht der Prüfvorrichtung von Fig. 1;
- Fig. 4: eine Vorderansicht der Prüfvorrichtung der Figuren 1 und 3; und
- Fig. 5: eine perspektivische Ansicht der Prüfvorrichtung der Figuren 1, 3 und 4 mit einer um 90° verschwenkten Kameraeinheit;
- Fig. 6: eine Draufsicht oben auf die Schnittkante von zwei Elektrodenfolien von oben; und
- Fig. 7: eine Ansicht auf eine Schnittkante von vorne.

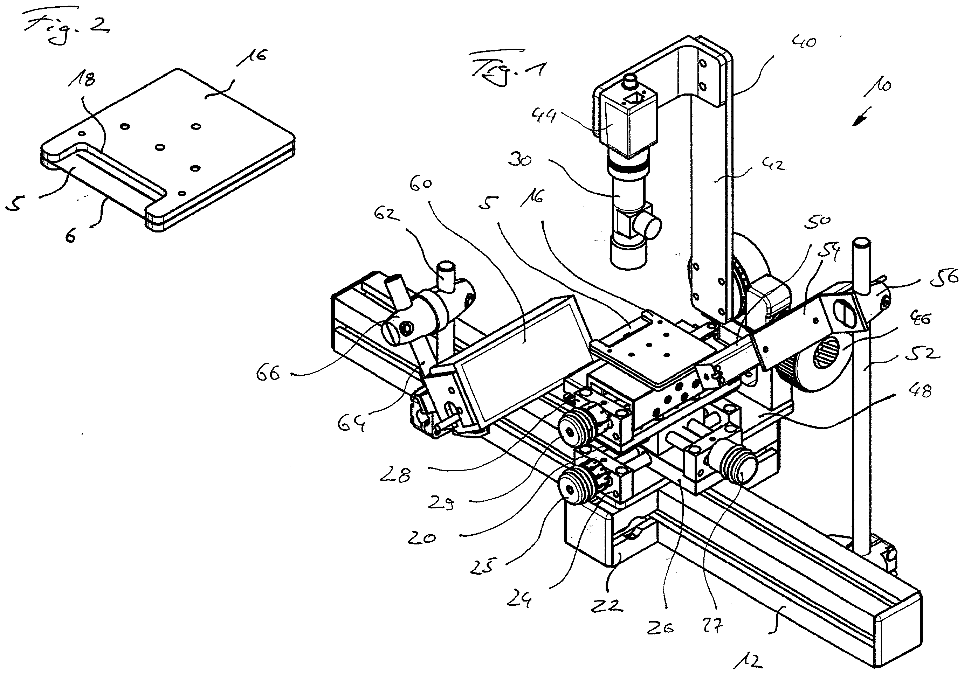

Gemäß den Figuren 1 bis 5 ist beispielhaft eine Prüfvorrichtung 10 für Elektrodenfolien 5 gezeigt. Eine Elektrodenfolie 5 mit einer zu prüfenden Folienkante 6 kann in einer plattenförmigen Aufnahmeeinheit 16 mit zwei Aufnahmeschalen mittig aufgenommen werden. Die Aufnahmeeinheit 16 kann eine vordere Ausnehmung 18 aufweisen, so dass ein Bereich der Elektrodenfolie 5 mit der zu prüfenden Folienkante 6 freiliegt.

Die Aufnahme 16 mit der Elektrodenfolie 5 kann in eine Halteeinrichtung 20 der Prüfvorrichtung 10 eingesetzt werden, wie schematisch in Figur 1 dargestellt ist. Die Halteeinrichtung 20 kann einen unteren Schlitten 22 umfassen, welcher verschiebbar entlang eines Grundträgers 12 der Prüfvorrichtung 10 gelagert und fixierbar ist. Der Grundträger 12 kann als ein Profil mit Längsführungen entlang der Außenflächen ausgebildet sein.

Auf dem Schlitten 22 der Halteeinrichtung 20 kann eine erste Justiereinrichtung 24 mit einem ersten Justierrad 25 angeordnet sein, mit welcher quer zur Längsrichtung des Grundträgers 12 eine zweite Justiereinrichtung 26 mit einem zweiten Justierrad 27 verstellt werden kann. Mit der zweiten Justiereinrichtung 27 kann eine darauf gelagerte Anstelleinrichtung 28 mit einem Anstellrad 29 längs des Grundträgers 12 verschoben und justiert werden. Auf der Anstelleinrichtung 28 kann die Aufnahmeeinheit 16 lösbar gehalten sein. Über die Anstelleinrichtung 28 kann die Lage der Aufnahmeeinheit 16 mit der Elektrodenfolie 5 verändert, insbesondere in einem Winkel angestellt werden. Mit der Anstelleinrichtung 28 kann die Aufnahmeeinheit 16 auch um 180° gewendet werden. Die Halteeinrichtung 20 kann so eine Halterung der Elektrodenfolie 5 in einer nahezu beliebigen Position im Raum ermöglichen.

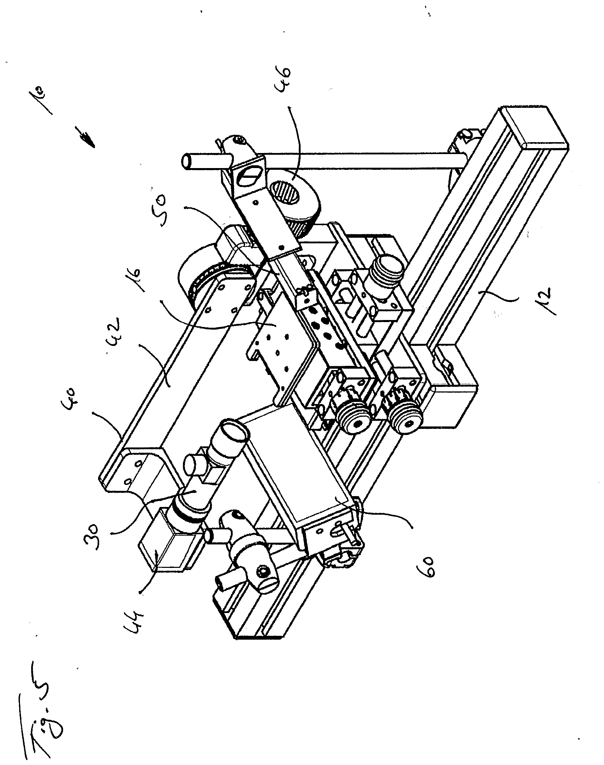

Oberhalb der Elektrodenfolie 5 in der Aufnahmeeinheit 16 ist eine Kameraeinheit 30 zur Erfassung eines Bildes der Elektrodenfolie 5 angeordnet. Hierzu kann die Kameraeinheit 30 mittels einer Verstelleinrichtung 40 mit einem Schwenkarm 42 und einem Halter 44 an dem Grundträger gelagert sein. Hierzu kann ein Lagerbock 48 der Verstelleinrichtung 40 ähnlich dem Schlitten 22 längs verschiebbar am Grundträger 12 angebracht sein. Über eine Handbetätigung 46, welche als ein Stellrad ausgebildet sein kann, kann die Kameraeinheit 30 aus einer vertikalen Position, welche in den Figuren 1, 3 und 4 dargestellt ist, verschwenkt werden, insbesondere in eine horizontale Position, wie dies in Figur 5 gezeigt ist.

Für eine ordnungsgemäße Erfassung eines Bildes der Elektrodenfolie 5 aus verschiedenen Positionen können weiterhin an dem Grundträger 12 eine erste Beleuchtungseinrichtung 50 und eine zweite Beleuchtungseinrichtung 60 in unterschiedlichen Positionen angeordnet sein. Die erste Beleuchtungseinrichtung 50 ist an einem ersten Tragarm 54 angebracht, welcher vertikal verstellbar entlang einer ersten Vertikalstrebe 52 gelagert und mittels eines ersten Klemmelementes 56 fixierbar ist.

In ähnlicher Weise kann die zweite Beleuchtungseinrichtung 60 an dem Grundträger 12 an einer zweiten Vertikalstrebe 62 gehaltert sein, entlang welchem ein zweiter

Tragarm 64 mit einem zweiten Klemmelement 66 fixierbar angebracht ist. An dem zweiten Tragarm 64 ist die zweite Beleuchtungseinrichtung 60 angeordnet.

Die beiden Beleuchtungseinrichtungen 50, 60 erstrecken sich jeweils etwa quer zum Grundträger 12, wobei die erste Beleuchtungsrichtung 50 oberhalb der Aufnahmeeinheit 16 und abgewandt von dem zu prüfenden Bereich der Elektrodenfolie 5 angeordnet ist, während die zweite Beleuchtungseinrichtung 60 gegenüberliegend unterhalb der Aufnahmeeinheit 16 positioniert ist.

Über die Kameraeinheit 30 kann zunächst eine Bilderfassung in einer vertikalen Position gemäß Figur 1 erfolgen, wobei beide Beleuchtungseinrichtungen 50, 60 oder nur eine davon, je nach gewünschter Beleuchtung eingeschaltet sind. In der Ausrichtung gemäß Figur 1 kann insbesondere ein Rauigkeitsprofil der Folienkante 6 von der Serite erfasst werden. Weiterhin kann die Kameraeinheit 30 über die Verstelleinrichtung 40 mit dem Schwenkarm 42 von der vertikalen Position gemäß Figur 1 um etwa 90° in eine horizontale Position gemäß Figur 5 verschwenkt werden. Hierbei kann durch eine Draufsicht auf die Folienkante 6 eine Oberflächenstruktur erfasst werden. In dieser zweiten Schwenkposition kann eine unterschiedliche Beleuchtung durch die erste Beleuchtungseinrichtung 50 und/oder die zweite Beleuchtungseinrichtung 60 erfolgen. Eine unterschiedliche Schaltung der beiden Beleuchtungseinrichtungen 50, 60 abhängig von der Schwenkposition der Kameraeinheit 30 kann automatisch durch eine Steuerung veranlasst werden.

Die Kameraeinheit 30 kann mit einer nicht dargestellten Auswertereinheit verbunden sein, mit welcher die aufgenommenen Bilder gespeichert und mittels einer entsprechenden Bildauswertesoftware ausgewertet werden können.

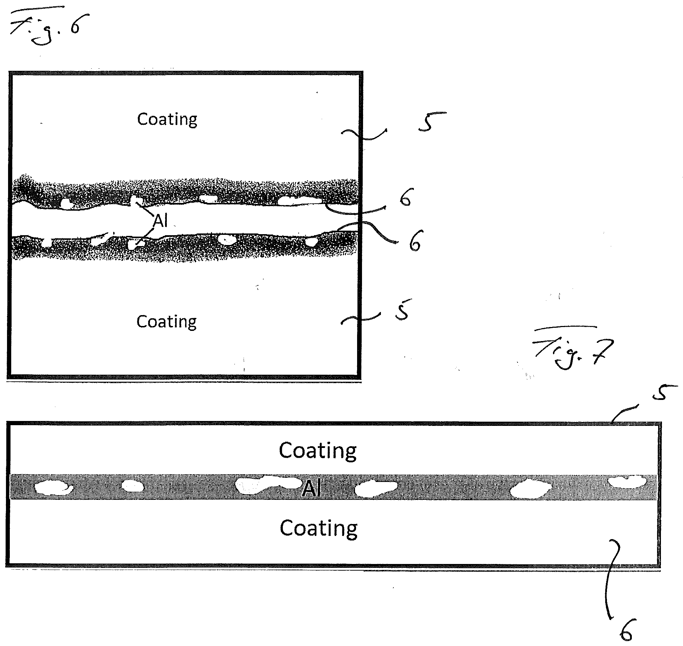

In Figur 6 ist eine Ansicht von zwei Elektrodenfolien 5 mit jeweils einer Folienkante 6 dargestellt, wie diese durch eine Kameraeinheit einer erfindungsgemäßen Prüfvorrichtung erfasst werden kann. Die Elektrodenfolien 5 können dabei an ihrer Oberseite und ihrer Unterseite mit einer Beschichtung (coating) versehen sein, wie anschaulich aus der Vorderansicht gemäß Figur 7 ersichtlich ist. Eine mittlere Schicht kann insbesondere Aluminium und/oder Kupfer aufweisen, wobei durch die Kameraeinheit nicht nur der Verlauf der Schnittkante 6, sondern auch freiliegende oder vorstehende Partikel aus Aluminium und/oder Kupfer erfassen kann.

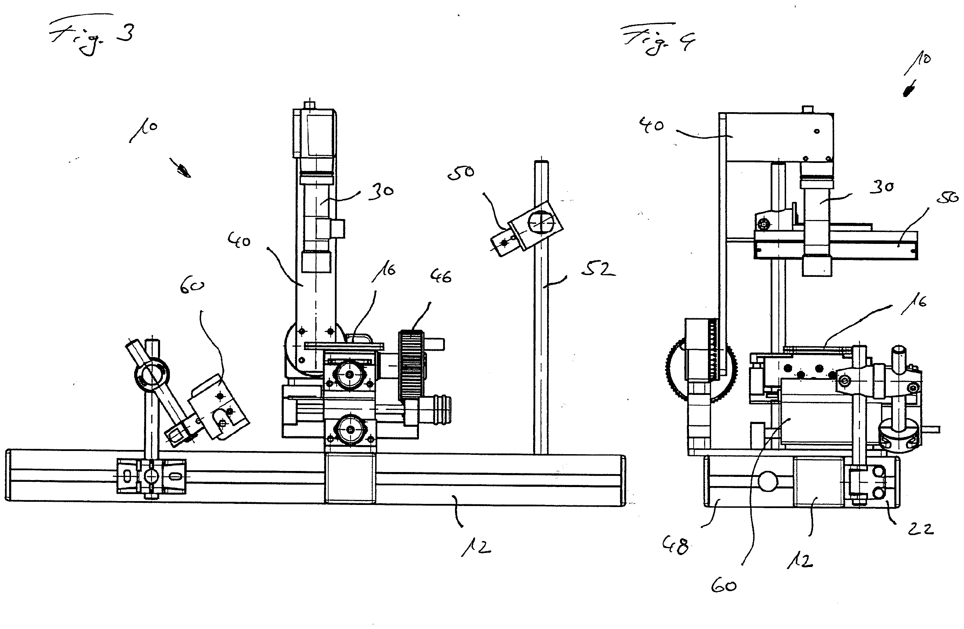

Die Ansicht einer Elektrodenfolie 5 gemäß Figur 6 kann in der Position einer Kameraeinrichtung gemäß den Figuren 1 und 3 erfasst werden, während eine Vorderansicht der Schnittkante 6 gemäß Figur 7 in einer Position der Kameraeinheit gemäß Figur 5 erfasst werden kann.

## Patentansprüche

1. Prüfvorrichtung für Elektrodenfolien (5), insbesondere für Batteriefolien, mit
- einer Halteeinrichtung (20) zum Halten einer Elektrodenfolie (5), wobei eine zu prüfende Folienkante (6) freiliegt,
- mindestens einer Kameraeinheit (30) zum Erfassen eines Bildes der Folienkante (6) und
- mindestens einer Beleuchtungseinheit (50, 60) zum Beleuchten der Folienkante (6),
**dadurch gekennzeichnet,**
- **dass** die Prüfvorrichtung (10) ausgebildet ist, sowohl ein Bild der Folienkante (6) von vorne in einer ersten Position als auch ein Bild der Folienkante (6) von einer Seite in einer zweiten Position zu erfassen, welche um etwa 90° verschwenkt zu der ersten Position ist.

2. Prüfvorrichtung nach Anspruch 1,
**dadurch gekennzeichnet,**
**dass** die Kameraeinheit (30) relativ zur Folienkante (6) mittels einer Verstelleinrichtung (40) verstellbar ist, mit welcher die Kameraeinheit (30) zum Erfassen eines Bildes der Folienkante (6) in der ersten Position und in der zweiten Position verstellbar ist.

3. Prüfvorrichtung nach Anspruch 2,
**dadurch gekennzeichnet,**
**dass** die Verstelleinrichtung (40) eine Handbetätigung (46) und/oder einen Verstellantrieb zum Verstellen der Kameraeinheit (30) aufweist.

4. Prüfvorrichtung nach Anspruch 2 oder 3,
**dadurch gekennzeicnet,**
dass die Verstelleinrichtung (40) einen Schwenkarm (42) aufweist, mit welchem die Kameraeinheit (30) verschwenkbar gelagert ist, vorzugsweise um etwa 90°.

5. Prüfvorrichtung nach einem der Ansprüche 1 bis 4,
**dadurch gekennzeichnet,**
**dass** die mindestens eine Beleuchtungseinrichtung (50, 60) einstellbar angeordnet ist.

6. Prüfvorrichtung nach einem der Ansprüche 1 bis 5,
**dadurch gekennzeichnet,**
**dass** eine erste Beleuchtungseinrichtung (50) zum Beleuchten der Folienkante (6) in der ersten Position und eine zweite Beleuchtungseinrichtung (60) zum Beleuchten der Folienkante (6) in einer zweiten Position vorgesehen ist.

7. Prüfvorrichtung nach Anspruch 6,
**dadurch gekennzeichnet,**
**dass** eine Steuereinrichtung vorgesehen ist,
welche die erste Beleuchtungseinrichtung (50) und/der die zweite Beleuchtungseinrichtung (60) abhängig von einer Verstellposition der Kameraeinheit (30) aktiviert.

8. Prüfvorrichtung nach einem der Ansprüche 1 bis 7,
**dadurch gekennzeichnet,**
**dass** die Elektrodenfolie (5) in der Halteeinrichtung (20) in einer ersten Folienposition und in einer zweiten Folienposition haltbar ist, welche um 180° gewendet zu der ersten Folienposition ist.

9. Prüfvorrichtung nach einem der Ansprüche 1 bis 8,
**dadurch gekennzeichnet,**
**dass** die Elektrodenfolie (5) in einer Aufnahmeeinheit (16) aufgenommen ist, mit welcher die Elektrodenfolie (5) in die Halteeinrichtung (20) einsetzbar und darin fixierbar ist.

10. Prüfvorrichtung nach einem der Ansprüche 1 bis 9,
**dadurch gekennzeichnet,**
**dass** die mindestens eine Kameraeinheit (30) mit einer Auswerteeinheit verbunden ist, mit welcher die erfassten Bilder hinsichtlich einer Struktur der Folienkante (6) auswertbar sind.

11. Prüfungseinrichtung nach einem der Ansprüche 1 bis 14,
**dadurch gekennzeichnet,**
**dass** eine Fördereinrichtung zum diskontinuierlichen und/oder kontinuierlichen Fördern der Elektrodenfolie (5) in die und/oder aus der Halteeinrichtung zum Prüfen vorgesehen ist.

12. Verfahren zum Prüfen einer Elektrodenfolie (5), insbesondere einer Batteriefolie, insbesondere mit einer Prüfvorrichtung (10) nach einem der Ansprüche 1 bis 11, wobei
- eine Elektrodenfolie (5) in einer Halteeinrichtung (20) gehalten wird, wobei eine zu prüfende Folienkante (6) freiliegt,
- mittels mindestens einer Kameraeinheit (30) ein Bild der Folienkante (6) erfasst wird und
- die Folienkante (6) mit mindestens einer Beleuchtungseinheit (50, 60) beleuchtet wird,
**dadurch gekennzeichnet,**
**dass** von der Elektrodenfolie (5) sowohl ein Bild der Folienkante (6) von vorne in einer ersten Position als auch ein Bild der Folienkante (6) von einer Seite in einer zweiten Position erfasst wird, welche um etwa 90° verschwenkt zu der ersten Position ist.

13. Verfahren nach Anspruch 12,
**dadurch gekennzeichnet,**
**dass** zum Erfassen der Bilder die Kameraeinheit (30) mittels einer Verstelleinrichtung (40) in unterschiedliche Positionen zum Erfassen der Bilder der Folienkante (6) verstellt wird.

14. Verfahren nach Anspruch 12 oder 13,
**dadurch gekennzeichnet,**
**dass** eine Lage der in der Halteeinrichtung (20) gehaltenen Elektrodenfolie (5) geändert wird, insbesondere um 180° gewendet wird.

15. Verfahren nach einem der Ansprüche 12 bis 14,
**dadurch gekennzeichnet,**
**dass** die erfassten Bilder der Folienkante (6) hinsichtlich von mindestens einem Qualitätsmerkmal ausgewertet werden, welches ausgewählt ist aus einem Verlauf der Folienkante (6), einer Rauigkeit der Folienkante (6) und/oder einer thermischen Einwirkung entlang der Folienkante (6).
